# EUROPÄISCHE PATENTSCHRIFT

(11) **EP 3 139 133 B1**
(45) Veröffentlichungstag und Bekanntmachung des Hinweises auf die Patenterteilung: **27.02.2019**
(21) Anmeldenummer: 16181077.5
(22) Anmeldetag: 25.07.2016
(51) Int. Cl.: G01D 5/353

(54) **VORRICHTUNG UND VERFAHREN ZUR ORTSAUFGELÖSTEN MESSUNG VON TEMPERATUR UND/ODER DEHNUNG MITTELS BRILLOUIN-STREUUNG**
DEVICE AND METHOD FOR LOCAL MEASUREMENT OF TEMPERATURE AND/OR STRAIN USING BRILLOUIN SCATTERING
DISPOSITIF ET PROCEDE DE MESURE A RESOLUTION SPATIALE DE LA TEMPERATURE ET/OU DE L'EXPANSION PAR DIFFUSION DE BRILLOUIN

(30) Priorität: 02.09.2015 DE 102015114670
(43) Veröffentlichungstag der Anmeldung: 08.03.2017
(73) Patentinhaber: LIOS Technology GmbH, 51063 Köln (DE)
(72) Erfinder: Dr. Hill, Wieland, 51519 Odenthal (DE); Dipl.-Ing. Rath, Alexander, 52393 Hürtgenwald (DE); Dipl.-Phys. Marx, Benjamin, 50733 Köln (DE)
(74) Vertreter: Basfeld, Rainer

(56) Entgegenhaltungen:
- DE-A1-102009 043 546
- US-A1- 2008 002 187
- US-B1- 7 283 216
- XUAN LIU ET AL: "Brillouin Spectrum in LEAF and Simultaneous Temperature and Strain Measurement", JOURNAL OF LIGHTWAVE TECHNOLOGY, IEEE SERVICE CENTER, NEW YORK, NY, US, Bd. 30, Nr. 8, 15. April 2012 (2012-04-15) , Seiten 1053-1059, XP011429171, ISSN: 0733-8724, DOI: 10.1109/JLT.2011.2168193

## Beschreibung

Die vorliegende Erfindung betrifft eine Vorrichtung und ein Verfahren zur ortsaufgelösten Messung von Temperatur und/oder Dehnung vermittels Brillouin-Streuung.

Brillouin-Streuung in Lichtleitfasern kann zur verteilten beziehungsweise ortsaufgelösten Messung von Temperatur und Dehnung entlang der Lichtleitfaser benutzt werden, weil die Frequenz und die Amplitude der Brillouin-Streuung eine Funktion der Messgrößen Temperatur und Dehnung sind (siehe dazu: Galindez-Jamioy & Löpez-Higuera, 2012, Brillouin Distributed Fiber Sensors: An Overview and Applications. 2012, 17).

Häufig wird nur die Brillouin-Frequenz gemessen, die sehr empfindlich, beispielsweise mit etwa 1MHz/°C beziehungsweise 0,05MHz/µε in Quarzglas, von den Messgrößen abhängt und sehr genau bestimmt werden kann. Allerdings besteht dabei das Problem, den Einfluss beider Messgrößen zu trennen.

Eine Trennung beider Messgrößen ist in einigen Fällen durch vergleichende Messungen in unterschiedlich eingebauten Lichtleitfasern wie beispielsweise Bündelader mit loser Faser oder Festader mit fester Faser möglich (siehe dazu: Inaudi & Glisic, 2006, Reliability and field testing of distributed strain and temperature sensors, 6167, 61671D-61671D-8). Alternativ können auch Messungen der Brillouin-Frequenzen entweder in Fasern mit mehreren Brillouin-Peaks (siehe dazu: Liu & Bao, 2012, Brillouin Spectrum in LEAF and Simultaneous Temperature and Strain Measurement. J. Lightwave Technol., 30(8), 1053-1059) oder Oligomodefasern mit wenigen unterschiedlichen räumlichen Moden (siehe dazu: Weng, Ip, Pan, & Wang, 2015, Single-end simultaneous temperature and strain sensing techniques based on Brillouin optical time domain reflectometry in few-mode fibers, Opt. Express, 23(7), 9024-9039) mit unterschiedlichen Abhängigkeiten der Frequenz von Temperatur und Dehnung zur Trennung der Messgrößen genutzt werden.

Sämtliche dieser Methoden sind aber nicht allgemein einsetzbar, weil nicht immer geeignete Lichtleitfasern in der Anwendung verfügbar sind. Außerdem ist die Verlegung und Messung mehrerer Lichtleitfasern oder von Spezialfasern mit erhöhtem Aufwand verbunden.

Eine weitere Methode zur Trennung beider Messgrößen ist die Messung von Frequenz und Amplitude eines oder mehrerer Brillouin-Peaks (siehe dazu: Parker, Farhadiroushan, Handerek, & Rogers, 1997, Temperature and strain dependence of the power level and frequency of spontaneous Brillouin scattering in optical fibers, Opt. Lett., 22(11), 787-789 sowie Maughan, Kee, & Newson, 2001, Simultaneous distributed fibre temperature and strain sensor using microwave coherent detection of spontaneous Brillouin backscatter, Measurement Science and Technology, 12(7), 834). Dadurch werden zwei unabhängige Messgrößen erhalten, aus denen grundsätzlich die beiden gesuchten physikalischen Parameter bestimmen werden können. Allerdings ist die Abhängigkeit der Amplitude von Temperatur und Dehnung schwach und liegt beispielsweise bei etwa 0,3%/°C. Deshalb muss die Amplitude sehr genau gemessen werden, um praktisch relevante Temperaturauflösungen und -genauigkeiten von etwa 1°C zu erreichen.

Eine bekannte Methode zur Verbesserung der Genauigkeit ist der Vergleich der Brillouin-Amplitude mit der Amplitude der Rayleigh-Streuung aus der gleichen Faser (siehe dazu: Wait & Newson, 1996, Landau Placzek ratio applied to distributed fibre sensing, Optics Communications, 122, 141-146). Durch die Berechnung des Verhältnisses von Brillouin- zu Rayleigh-Amplitude, das Landau-Placzek-Verhältnis genannt wird, kann der Einfluss der Faserdämpfung herausgerechnet werden.

In der Regel erfolgt keine einfache Messung des Brillouin-Signals mit einem optischen Filter und einer Fotodiode, weil die hierfür erforderlichen sehr schmalbandigen optischen Filter schwierig herzustellen und thermisch nicht besonders stabil sind. Außerdem kann die alternative Messung der Brillouin-Streuung mit einem optischen Überlagerungsempfänger niedrigere Signalstärken messen (siehe dazu: Maughan, Kee, & Newson, 2001). Dabei wird das Brillouin-Streusignal mit Laserlicht mit der gleichen Frequenz wie der die Brillouin-Streuung anregende Laser oder mit einer um einige GHz verschobenen Frequenz (Local Oszillator LO) überlagert. Der Photoempfänger detektiert dann ein Überlagerungssignal bei einer Frequenz, die der Differenz zwischen Brillouin-Frequenz und Laserbeziehungsweise LO-Frequenz entspricht. Wird mit dem anregenden Laser gemischt, liegt die Differenzfrequenz für Quarzglas bei etwa 10 GHz. In der Regel wird dieses GHz-Signal mit einem elektronischen lokalen Oszillator gemischt, um eine besser messbare Differenzfrequenz unterhalb 1 GHz zu erhalten (Shimizu, Horiguchi, Koyamada, & Kurashima, 1994, Coherent self-heterodyne Brillouin OTDR for measurement of Brillouin frequency shift distribution in optical fibers, Lightwave Technology, Journal of, 12(5), 730-736).

Allerdings besteht zusätzlich zur Faserdämpfung noch das Problem der Polarisationsabhängigkeit des gemessenen Signals. Dieses Problem beeinträchtigt die Genauigkeit der Messung beider Größen, Frequenz und Amplitude. Bei der Überlagerung des Brillouin-Signals mit einem optischen lokalen Oszillator wird nur der Signalanteil auf die Differenzfrequenz gemischt, der mit der Polarisation des lokalen Oszillators übereinstimmt. Dadurch geht Signal mit anderer Polarisation für die Messung verloren. Außerdem ändert sich die Polarisation des Brillouin-Signals bei der Übertragung durch die Lichtleitfaser aufgrund der spannungsinduzierten Doppelbrechung in der Lichtleitfaser. Das heißt, die Amplitude der gemessenen Polarisationskomponente des Brillouin-Signals variiert stark in Abhängigkeit von der Entfernung. Durch diese Polarisationsabhängigkeit wird somit eine genaue Amplitudenbestimmung erheblich erschwert und auch die Genauigkeit der Frequenzbestimmung beeinträchtigt. Bisher wurde versucht, diesen Effekt durch Mittelungen über Messungen mit unterschiedlicher Polarisation von anregendem Laser oder lokalem Oszillator auszugleichen (siehe dazu: Fan, Huang, & Li, 2009, Brillouin-based distributed temperature and strain sensor using the Landau-Placzek Ratio, 7381, 738105-738105-9 sowie Song, Zhao, & Zhang, 2005, Optical coherent detection Brillouin distributed optical fiber sensor based on orthogonal polarization diversity reception, Chin. Opt. Lett., 3(5), 271-274). Allerdings sind sehr viele Mittelungen erforderlich für eine einigermaßen genaue Messung und das Problem des Signalverlusts wird hierdurch nicht gelöst.

Aus der DE 10 2009 043 546 A1 sind eine Vorrichtung und ein Verfahren zur ortsaufgelösten Messung mechanischer Größen vermittels Rayleigh-Streuung bekannt. Dabei wird von einer Laserlichtquelle eine Laserstrahlung erzeugt. Von der Laserstrahlung wird vor dem Eintritt in eine Lichtleitfaser ein Teil abgezweigt. Der aufgrund von Rayleigh-Streuung aus der Lichtleitfaser zurückgestreute Anteil der Laserstrahlung wird von einem Polarisationsstrahlteiler abgezweigt und von einem optischen Koppler mit dem abgezweigten Anteil der Laserstrahlung kombiniert. Die kombinierten Strahlungen werden von einem Photodetektor erfasst und von einer Datenverarbeitungseinheit ausgewertet.

Das der vorliegenden Erfindung zugrunde liegende Problem ist die Schaffung einer Vorrichtung und die Angabe eines Verfahrens der eingangs genannten Art, mit denen einfacher und/oder genauer die Temperatur und die Dehnung bestimmt werden können.

Dies wird erfindungsgemäß durch eine Vorrichtung mit den Merkmalen des Anspruchs 1 sowie durch ein Verfahren mit den Merkmalen des Anspruchs 10 erreicht. Die Unteransprüche betreffen bevorzugte Ausgestaltungen der Erfindung.

Gemäß Anspruch 1 ist vorgesehen, dass die Vorrichtung umfasst:
- mindestens eine Laserlichtquelle, die eine Laserstrahlung erzeugen kann,
- eine zur Messung verwendete Lichtleitfaser, in die die Laserstrahlung eingekoppelt werden kann und aus der aufgrund von Brillouin-Streuung erzeugte Brillouin-Signale ausgekoppelt werden können,
- Sensormittel, die die ausgekoppelten Brillouin-Signale erfassen können,
- Auswertemittel, die aus den erfassten Brillouin-Signalen die Temperatur und/oder Dehnung zumindest von Abschnitten der Lichtleitfaser ortsaufgelöst bestimmen können,
- mindestens einen optischen Polarisationsstrahlteiler, der die ausgekoppelten Brillouin-Signale in zwei Komponenten mit voneinander verschiedenen Polarisationen aufspalten kann,
- zwei optische Koppler, die jeder der beiden von dem mindestens einen optischen Polarisationsstrahlteiler getrennten Komponenten des Brillouin-Signals jeweils eine linear polarisierte Komponente einer Laserstrahlung polarisationsrichtig hinzumischen können.

Es kann dabei vorgesehen sein, dass die Sensormittel die beiden Komponenten getrennt voneinander erfassen können. Insbesondere wird bei einer erfindungsgemäßen Vorrichtung das Brillouin-Signal in zwei Polarisationskomponenten aufgespalten, die dann jeweils mit einem Signal passender Polarisation überlagert und auf zwei optischen Detektoren detektiert werden. Dadurch wird stets das gesamte Signal gemessen und es sind keine Mittelungen über Messungen mit unterschiedlicher Polarisation erforderlich. Durch das Hinzumischen einer Laserstrahlung zu dem Brillouin-Signal wird die Nachweisstärke der Vorrichtung verbessert, weil das auszuwertende Signal durch das Hinzumischen deutlich verstärkt werden kann.

Es kann vorgesehen sein, dass die Vorrichtung einen Strahlteiler aufweist, der von der Laserstrahlung der für die Anregung der Brillouin-Streuung verwendeten Laserlichtquelle vor der Einkopplung in die zur Messung verwendete Lichtleitfaser einen Anteil abzweigen kann, wobei dieser Anteil der Laserstrahlung dem Brillouin-Signal hinzugemischt werden kann.

Alternativ dazu kann vorgesehen sein, dass die Vorrichtung eine zweite Laserlichtquelle umfasst, die Laserstrahlung erzeugen kann, die dem Brillouin-Signal hinzugemischt werden kann.

Insbesondere kann dabei die zweite Laserlichtquelle eine von der ersten Laserlichtquelle verschiedene Frequenz, insbesondere eine um etwa 10 GHz verschiedene Frequenz, aufweisen. Es kann vorgesehen sein, dass die Vorrichtung einen Strahlteiler aufweist, der von der Laserstrahlung der für die Anregung der Brillouin-Streuung verwendeten Laserlichtquelle vor der Einkopplung in die zur Messung verwendete Lichtleitfaser einen Anteil abzweigen kann, wobei dieser Anteil zur Abstimmung der zweiten Laserlichtquelle verwendet werden kann. Insbesondere kann die Vorrichtung eine O-PLL umfassen, die die Differenzfrequenz zwischen der ersten und der zweiten Laserlichtquelle stabilisiert. Durch die vorgenannte Wahl der Differenzfrequenz können als optische Detektoren Empfänger mit einer Grenzfrequenz unter 1 GHz eingesetzt werden, die eine niedrigere Nachweisgrenze aufweisen.

Alternativ kann vorgesehen sein, dass als zweite Laserlichtquelle ein Brillouin-Laser verwendet wird, wie dies in der US 7,283,216 B1 beschrieben ist. Auch dabei kann die Vorrichtung einen Strahlteiler aufweisen, der von der Laserstrahlung der für die Anregung der Brillouin-Streuung verwendeten Laserlichtquelle vor der Einkopplung in die zur Messung verwendete Lichtleitfaser einen Anteil abzweigen kann, wobei dieser Anteil für das optische Pumpen des Brillouin-Lasers genutzt wird, dessen Brillouin-Frequenz sich von derjenigen des zu messenden Brillouin-Signals unterscheidet. Aufgrund dieses Frequenzunterschieds kann der Brillouin-Laser als Optischer Lokaler Oszillator (OLO) dienen.

Es besteht die Möglichkeit, dass die Vorrichtung Komponenten für die Messung der Rayleigh-Streuung umfasst. Dadurch kann die Genauigkeit der Messvorrichtung verbessert werden.

Insbesondere können die Komponenten für die Messung der Rayleigh-Streuung eine weitere Laserlichtquelle umfassen, die von der ersten Laserlichtquelle verschieden ist, wobei vorzugsweise die weitere Laserlichtquelle auch von einer gegebenenfalls vorhandenen zweiten Laserlichtquelle für die Erzeugung einer dem Brillouin-Signal hinzuzumischenden Laserstrahlung verschieden ist. Die weitere Laserlichtquelle kann gezielt zur Anregung der Rayleigh-Streuung verwendet werden.

Es kann vorgesehen sein, dass die Vorrichtung eine als Referenz dienende Lichtleitfaser oder einen als Referenz dienenden Abschnitt der zur Messung verwendeten Lichtleitfaser aufweist, der beispielsweise als Referenzspule ausgebildet ist, und zumindest über eine vorgegebene Länge ein konstantes Brillouin-Signal erzeugt, so dass dieses Brillouin-Signal mit den Sensormitteln erfasst und zur Kalibration der Empfindlichkeit verwendet werden kann. Auch wenn die optischen Elemente in den beiden Empfangskanälen aus welchen Gründen auch immer eine unterschiedliche Sensitivität aufweisen, können auf diese Weise zuverlässige Messergebnisse erhalten werden.

Das Verfahren gemäß Anspruch 10 umfasst folgende Verfahrensschritte:
- Es wird eine Laserstrahlung erzeugt,
- zur Messung von Temperatur und Dehnung wird die Laserstrahlung in eine Lichtleitfaser eingekoppelt,
- von der Laserstrahlung in der Lichtleitfaser erzeugte Brillouin-Signale werden aus der Lichtleitfaser ausgekoppelt,
- die ausgekoppelten Brillouin-Signale werden in zwei Komponenten mit voneinander verschiedenen Polarisationen aufgespalten,
- jeder der beiden Komponenten des Brillouin-Signals wird jeweils eine linear polarisierte Komponente einer Laserstrahlung polarisationsrichtig hinzugemischt,
- die beiden mit den Laserstrahlungen gemischten Komponenten der ausgekoppelten Brillouin-Signale werden erfasst,
- Auswertemittel bestimmen ortsaufgelöst aus den erfassten Komponenten der Brillouin-Signale die Temperatur und/oder Dehnung zumindest von Abschnitten der Lichtleitfaser,
- aus den beiden erfassten Komponenten der Brillouin-Signale werden zwei Ausgangssignale generiert, die in geeigneter Weise kombiniert werden, um ein polarisationsunabhängiges Ausgangssignal für die Bestimmung der Temperatur und/oder der Dehnung zu erhalten.

Es besteht dabei die Möglichkeit, dass die beiden Komponenten der ausgekoppelten Brillouin-Signale getrennt voneinander erfasst werden.

Insbesondere können die beiden Ausgangssignale vor oder nach einer Digitalisierung kombiniert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematische Darstellung einer ersten Ausführungsform einer erfindungsgemäßen Vorrichtung;
- Fig. 2: eine schematische Darstellung einer zweiten Ausführungsform einer erfindungsgemäßen Vorrichtung;
- Fig. 3: eine schematische Darstellung einer dritten Ausführungsform einer erfindungsgemäßen Vorrichtung.

In den Figuren sind gleiche oder funktional gleiche Teile mit gleichen Bezugszeichen versehen. Die gestrichelten Verbindungslinien repräsentieren optische Signale, die vorzugsweise in Lichtleitern geführt werden. Die durchgezogenen Verbindungslinien repräsentieren elektrische Signalleitungen.

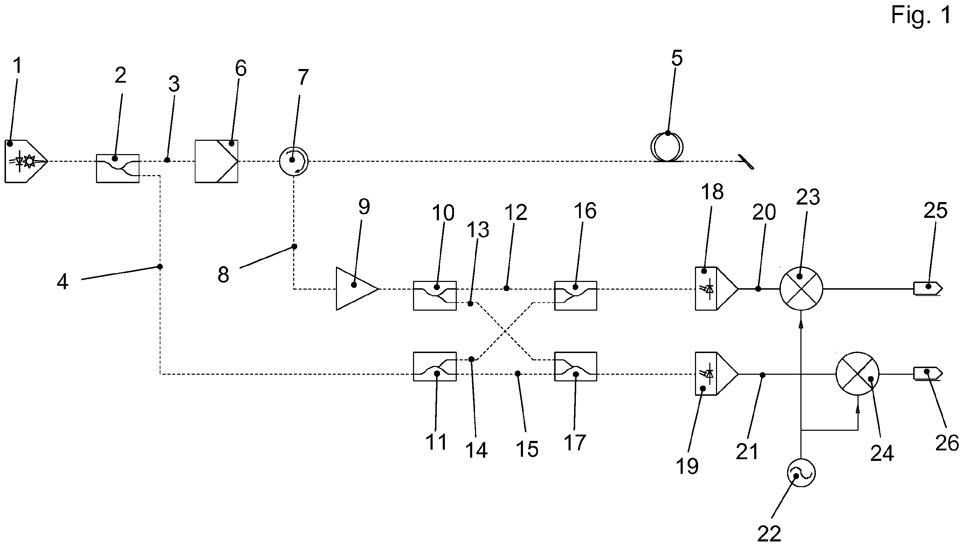

Bei der in Fig. 1 abgebildeten Vorrichtung wird eine optische Überlagerung mit der für die Anregung der Brillouin-Streuung eingesetzten Laserstrahlung genutzt.

Die in Fig. 1 abgebildete erfindungsgemäße Vorrichtung umfasst eine Laserlichtquelle 1, die schmalbandige Laserstrahlung emittiert, beispielsweise mit einer Linienbreite von 1 MHz. Weiterhin weist die Laserstrahlung der Laserlichtquelle 1 eine konstante Leistung von beispielsweise einigen 10mW auf. Vorzugsweise werden als Laserlichtquelle 1 frequenzstabilisierte Diodenlaser wie beispielsweise ein DFB-Laser oder andere schmalbandige Laser verwendet, deren Emissionswellenlänge im nahen Infrarotbereich angeordnet sind, beispielsweise bei 1550nm.

Die in Fig. 1 abgebildete Vorrichtung umfasst weiterhin einen als faseroptischer Teiler ausgebildeten Strahlteiler 2, der die Laserstrahlung der Laserlichtquelle 1 in zwei Anteile 3, 4 aufteilen kann. Der erste Anteil 3 wird in die zur Messung verwendete Lichtleitfaser 5 eingekoppelt, in der über die Anregung von Brillouin-Streuung Temperatur und/oder Dehnung ortsaufgelöst bestimmt werden sollen. Der zweite Anteil 4 wird für die Überlagerung mit einem aus der Lichtleitfaser 5 ausgekoppelten, durch die Brillouin-Streuung erzeugten Brillouin-Signal verwendet, wie im Nachfolgenden noch detaillierter beschrieben wird.

Die Vorrichtung umfasst weiterhin einen optischen Modulator 6, der den ersten Anteil 3 der Laserstrahlung entsprechend dem verwendeten Verfahren für die örtliche Zuordnung der Streusignale modulieren kann. Beispielsweise werden aus dem ersten Anteil 3 bei der Verwendung eines OTDR- Verfahrens (optical time domain reflectometry), Pulse oder Pulszüge und bei der Verwendung eines OFDR-Verfahrens (optical frequency domain reflectometry) amplitudenmodulierte Signale geformt. Ein nicht abgebildeter optischer Verstärker kann den für die Messung verwendeten ersten Anteil 3 der Laserstrahlung verstärken, bevor er über einen ebenfalls von der Vorrichtung umfassten optischen, insbesondere faseroptischen, Zirkulator 7 in die zur Messung verwendete Lichtleitfaser 5 geleitet wird.

In der zur Messung verwendeten Lichtleitfaser 5 entstehen Brillouin-Streusignale, die mit einer der Entfernung entsprechenden Laufzeitverzögerung von etwa 10µs/km zurück zum optischen Zirkulator 7 kommen und von diesem in den Empfangspfad 8 der Vorrichtung geleitet werden. Ein nicht dargestellter, optionaler optischer Filter wie beispielsweise ein Faser-Bragg-Gitter (FBG) kann zur Unterdrückung von Rayleigh-Streulicht eingesetzt werden, um eine Störung der Messung des schwächeren Brillouin-Signals zu vermeiden. Weiterhin kann in dem Empfangspfad 8 eine optische Verstärkung durch einen optionalen optischen Verstärker 9 erfolgen.

Sowohl das Brillouin-Signal als auch der zweite Anteil 4 der Laserstrahlung werden durch optische, insbesondere faseroptische, Polarisationsstrahlteiler 10, 11 in linear polarisierte Komponenten 12, 13, 14, 15 aufgeteilt. Vorzugsweise wird dabei der zweite Anteil 4 der Laserstrahlung so, insbesondere hinsichtlich seiner Polarisationsrichtung unter einem Winkel von 45°, in den Polarisationsstrahlteiler 11 eingekoppelt, dass zwei möglichst gleich starke und orthogonal zueinander polarisierte Komponenten 14, 15 entstehen.

Anstelle des für die Aufteilung des zweiten Anteils 4 der Laserstrahlung vorgesehenen Polarisationsstrahlteilers 11 kann auch ein polarisationserhaltender Teiler (nicht abgebildet) vorgesehen werden, der die Laserstrahlung in einem Verhältnis 50:50 aufteilt.

Das Brillouin-Signal aus der zur Messung verwendeten Lichtleitfaser 5 weist in Abhängigkeit von der durchlaufenen Faserstrecke und damit auch von der Entfernung ganz unterschiedliche Polarisationszustände auf. Deshalb ist das Verhältnis der beiden Komponenten 12, 13 nicht konstant, sondern hängt stark von der Entfernung ab.

Hinter den Polarisationsstrahlteilern 10, 11 sind zwei optische, insbesondere faseroptische, Koppler 16, 17 angeordnet, die jeweils eine Komponente 12, 13 des Brillouin-Signals mit einer Komponente 14, 15 des zweiten Anteils 4 der Laserstrahlung koppeln. Die beiden Komponenten 14, 15 unterschiedlicher Polarisation des zweiten Anteils 4 der Laserstrahlung und die beiden Komponenten 12, 13 unterschiedlicher Polarisation des Brillouin-Signals werden dabei in den faseroptischen Kopplern 16, 17 polarisationsrichtig zusammengeführt.

Im Falle einer unbalancierten Detektion werden hier vorzugsweise asymmetrische Koppler eingesetzt, bei denen ein großer Teil des Brillouin-Signals und ein kleiner Teil des zweiten Anteils 4 der Laserstrahlung kombiniert und zu den im Nachfolgenden noch näher beschriebenen optischen Detektoren 18, 19 geleitet werden. Dadurch wird eine unnötige Schwächung des Brillouin-Signals vermieden. Ein derartiger asymmetrischer Koppler kann beispielsweise ein Kopplungsverhältnis von 95:5 aufweisen, insbesondere ein Kopplungsverhältnis zwischen 90:10 und 99:1. Durch asymmetrische Kopplungsverhältnisse können unnötige Signalverluste vermieden werden, wobei ein höherer Verlust der dem Brillouin-Signal zugemischten Laserleistung unkritisch ist, weil dieses Signal deutlich stärker ist.

Für ein Detektionsschema mit einer balancierten Empfangsdiode wird vorzugsweise ein symmetrisches Kopplungsverhältnis verwendet.

In den optischen Detektoren 18, 19 findet eine Überlagerung der polarisationsrichtig zusammengeführten Brillouin-Signale und Laserstrahlungsanteile statt. Insbesondere entsteht dabei jeweils ein Schwebungssignal 20, 21 mit der Differenzfrequenz zwischen Brillouin-Signal und Laserstrahlungsanteil im Bereich um 10GHz. Dieses Schwebungssignal 20, 21 ist hinsichtlich seiner Frequenz abhängig von dem Material des für die Messung verwendeten Lichtleiters 5, der Temperatur und der Dehnung.

Die Leistung der Schwebungssignale 20, 21 ist proportional zur Wurzel aus dem Produkt der Leistungen von Brillouin-Signal und Laserstrahlungsanteil. Durch Einsatz hoher Laserleistungen entsteht also ein deutlich stärkeres Messsignal als bei direkter Messung des Brillouin-Streulichts, wodurch die Nachweisstärke der Vorrichtung erheblich verbessert wird.

Jedes der Schwebungssignale 20, 21 wird mit einem elektronischen Lokalen Oszillator 22 in jeweils einem elektronischen Mischer 23, 24 auf eine gut messbare Frequenz unterhalb 1 GHz heruntergemischt. Die Ausgangssignale 25, 26 dieser Mischer 23, 24 für beide Polarisationen werden weiter verstärkt und digitalisiert.

Insbesondere entspricht dabei das erste Ausgangssignal 25 der horizontalen Polarisation und das zweite Ausgangssignal 26 der vertikalen Polarisation der Schwebungssignale 20, 21 beziehungsweise des Brillouin-Signals. Vor oder nach der Digitalisierung werden beide Ausgangssignale 25, 26 in geeigneter Weise kombiniert, um ein polarisationsunabhängiges Ausgangssignal für die Bestimmung der ortsabhängigen Brillouin-Parameter und letztendlich der Temperatur beziehungsweise der Dehnung zu erhalten.

Für die wohldefinierte und stabile Überlagerung der gewünschten Polarisationskomponenten ist es vorteilhaft, die Lichtleiter von der Laserlichtquelle 1 über die Polarisationsstrahlteiler 10, 11 bis zu den faseroptischen Koppler 16, 17 sowie gegebenenfalls auch die Lichtleiter zu den optischen Detektoren 18, 19 als polarisationserhaltende Fasern auszuführen. Alternativ dazu können vorteilhafterweise auch Single-Mode-Fasern verwendet werden.

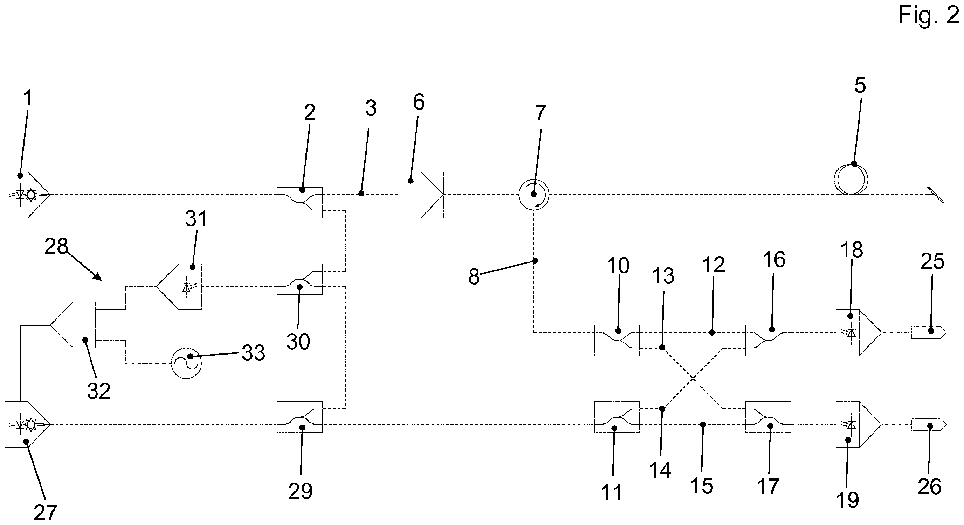

Die Vorrichtung gemäß Fig. 2 weist im Unterschied zur Vorrichtung gemäß Fig. 1 zusätzlich zu der ersten Laserlichtquelle 1 eine zweite schmalbandige Laserlichtquelle 27 auf, deren Laserstrahlung zur Überlagerung mit dem Brillouin-Signal eingesetzt wird. Dabei wird die Frequenz dieser zweiten Laserlichtquelle 27 gerade so eingestellt, dass sie so gegenüber der Frequenz der ersten Laserlichtquelle 1 verschoben ist, dass die Differenzfrequenz zwischen Brillouin-Streulicht und zweiter Laserlichtquelle 27 unterhalb 1 GHz liegt. Beispielsweise bei der Verwendung von Quarzglaslichtleitern ist dabei eine Frequenzverschiebung der beiden Laserlichtquellen 1, 27 zueinander von etwas mehr als 10 GHz erforderlich.

Durch die unterhalb von 1 GHz liegende Differenzfrequenz können optische Detektoren 18, 19 mit einer Grenzfrequenz unter 1 GHz eingesetzt werden, die eine niedrigere Nachweisgrenze aufweisen. Außerdem ist die Verstärkung und Filterung der Signale in diesem Frequenzbereich einfacher und effizienter.

Für die Stabilisierung der zweiten Laserlichtquelle 27 auf den gewünschten Frequenzabstand zur ersten Laserlichtquelle 1 wird eine nachfolgend O-PLL (optical phase locked loop) 28 genannte Phasenregelschleife mit optischem Eingangssignal eingesetzt. Ein Teil der Laserstrahlung beider Laserlichtquellen 1, 27 wird über als faseroptischer Teiler ausgebildeten Strahlteiler 2, 29 abgetrennt, mit einem faseroptischen Koppler 30 polarisationsrichtig zusammengeführt und auf einem optischen Detektor 31 überlagert. Das gemessene Signal enthält einen Anteil bei der Differenzfrequenz beider Laserlichtquellen, die im Bereich um 10 GHz liegen soll. Die Frequenz des Signals wird in einer nachfolgend PLL-Schaltung 32 genannten Phasenregelschleife mit der Frequenz eines elektronischen lokalen Oszillators 33 verglichen, der auf die gewünschte Differenzfrequenz eingestellt wurde. Die Frequenz einer der beiden Laserlichtquellen 1, 27 wird anhand des Vergleichssignals so nachgestellt, dass die Differenzfrequenz der Laserlichtquellen 1, 27 mit der des lokalen Oszillators 33 übereinstimmt. Falls Diodenlaser eingesetzt werden, erfolgt die Einstellung der Laserfrequenz vorzugsweise über den Betriebsstrom.

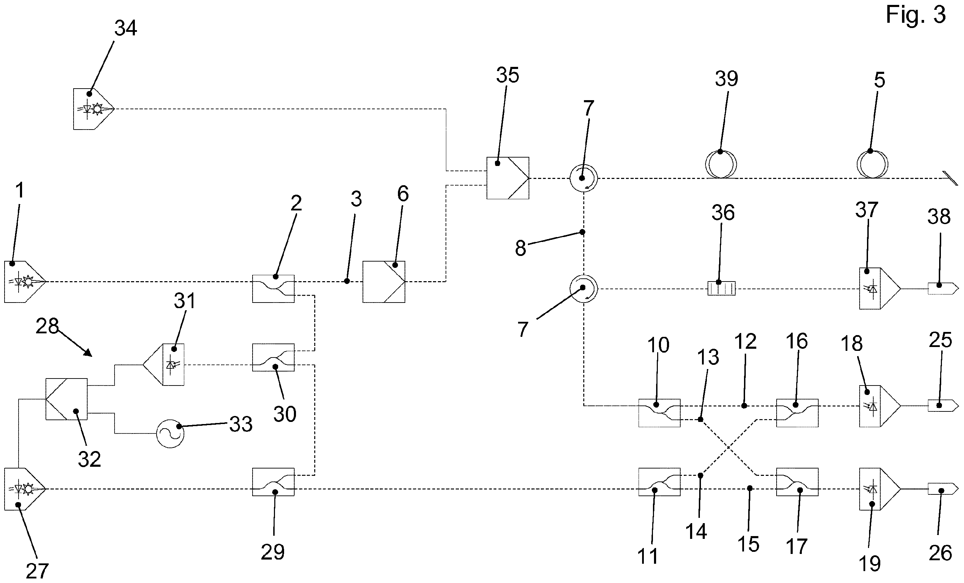

Die Vorrichtung gemäß Fig. 3 unterscheidet sich von derjenigen gemäß Fig. 2 durch zusätzliche Komponenten für die Messung der Rayleigh-Streuung.

Wenn die Rayleigh-Streuung mit dem gleichen schmalbandigen Laser wie die Brillouin-Streuung angeregt würde, ergäbe sich ein Rückstreusignal, dessen Amplitude aufgrund des Coherent Rayleigh Noise (CRN) stark variiert. Solch ein Signal eignet sich nicht als Bezugswert für die Berechnung des Landau-Placzek-Verhältnisses.

Eine Möglichkeit, das CRN zu eliminieren, besteht darin, mehrere Messungen mit der schmalbandigen Laserlichtquelle bei unterschiedlichen Wellenlängen zu mitteln.

In Fig. 3 ist eine Variante abgebildet, bei der zusätzlich eine weitere, insbesondere dritte Laserlichtquelle 34 zur Anregung der Rayleigh-Streuung vorgesehen ist. Diese zusätzliche Laserlichtquelle 34 kann ein breitbandiger Laser mit beispielsweise einigen nm Halbwertsbreite sein. Es soll an dieser Stelle angemerkt werden, dass die Laserstrahlung der weiteren Laserlichtquelle 34 damit deutlich breitbandiger ist als die von der ersten Laserlichtquelle 1 ausgehende Laserstrahlung.

Es besteht die Möglichkeit, mit einem optischen Schalter 35 zwischen der ersten und der weiteren Laserlichtquelle 1, 34 für die Anregung der Brillouin- und der Rayleigh-Streuung zu wechseln oder aber auch die Laserstrahlungen über einen nicht abgebildeten faseroptischen Koppler zusammenführen, um dann die Laserlichtquellen 1, 34 nach Bedarf einzuschalten.

Die für die Anregung der Rayleigh-Streuung vorgesehene Laserlichtquelle 34 kann direkt gepulst, pulskodiert oder moduliert werden. Alternativ kann der gewünschte zeitliche Verlauf der Amplitude auch über einen optischen Modulator erzeugt werden.

Das Brillouin-Signal kann über einen optischen Filter 36, wie beispielsweise ein Faser-Bragg-Gitter (FBG), vom Rayleigh-Signal getrennt werden, wobei das Rayleigh-Signal über einen zusätzlichen optischen Detektor 37 empfangen, gefiltert und verstärkt werden kann. Das so gewonnene Ausgangssignal 38 wird danach digitalisiert und digital weiterverarbeitet.

Bei der Ausführungsform gemäß Fig. 3 sind zwei optische Zirkulatoren 7 mit jeweils drei Anschlüssen vorgesehen. Es besteht die Möglichkeit, anstelle zweier optischer Zirkulatoren nur einen optischen Zirkulator mit vier Anschlüssen vorzusehen.

Für den Fall, dass die optischen Elemente, Fotoempfänger und Verstärker in den beiden Empfangskanälen hinter den Polarisationsstrahlteilern 10, 11 zu einer unterschiedlichen Sensitivität führen, kann ein Teil der Messstrecke als Referenzspule 39 ausgeführt sein. Dies ist in Fig. 3 beispielhaft abgebildet. Es besteht durchaus die Möglichkeit, auch bei einer Ausführungsform gemäß den Fig. 1 und/oder Fig. 2 eine derartige Referenzspule 39 vorzusehen. Andererseits besteht durchaus die Möglichkeit, die Referenzspule 39 bei der Ausführungsform gemäß Fig. 3 wegzulassen.

In der Referenzspule 39 ist eine gewisse Länge optischer Faser, wie beispielsweise 100 m, so eingebaut, dass die gesamte Faserlänge das gleiche Brillouin-Signal erzeugt. Insbesondere soll die Faser konstante Temperatur und konstante Dehnung, insbesondere keine Dehnung, aufweisen. Dann kann das Brillouin-Signal der Referenzspule 39 mit beiden Empfangskanälen gemessen und zur Kalibration der Empfindlichkeit der Empfangskanäle verwendet werden.

Ausgehend davon, dass das Signal aus der Referenzspule 39 in beiden Polarisationen gleich stark ist, werden die Empfangskanäle so kalibriert, dass sie für die Referenzspule insgesamt gleichstarke Signale messen. Die so eingestellte gleiche Empfindlichkeit der Empfangskanäle ist für die optimale Kombination der beiden Empfangssignale vorteilhaft.

Anstelle der in Fig. 1 bis Fig. 3 abgebildeten Ausführungsformen mit jeweils zwei optischen Detektoren 18, 19 für die getrennte Erfassung der beiden Komponenten 12, 13 können auch kombinierte optische Detektoren (nicht abgebildet) für die Komponenten 12, 13 vorgesehen sein. Beispielsweise könnten dazu zwei Fotodioden auf einem Chip beziehungsweise in einem Gehäuse oder auch nur zwei Bereiche auf einer Fotodiode vorgesehen sein. Dabei können die beiden, beispielweise von diesen Fotodioden oder diesen getrennten Bereichen erzeugten, Fotoströme parallel geschaltet werden, so dass somit nur deren Summe verstärkt und digitalisiert wird.

Der Vorteil einer derartigen Gestaltung ist ein besseres Signal-Rausch-Verhältnis des analogen Signals. Für diese Variante sollte eine Möglichkeit vorgesehen werden, das optische Signal zu kalibrieren, so dass beide Signale gleichstark empfangen werden. Dies kann beispielsweise über einen variablen optischen Abschwächer in einem der Empfangszweige geschehen, der anhand von Charakteristika des Messsignals angesteuert wird.

### Bezugszeichenliste:

- 1, 27, 34: Laserlichtquelle
- 2, 29: Strahlteiler
- 3: erster Anteil der Laserstrahlung
- 4: zweiter Anteil der Laserstrahlung
- 5: zur Messung verwendete Lichtleitfaser
- 6: optischer Modulator
- 7: optischer Zirkulator
- 8: Empfangspfad
- 9: optischer Eingangsverstärker
- 10, 11: optischer Polarisationsstrahlteiler
- 12, 13, 14, 15: linear polarisierte Komponenten
- 16, 17, 30: optischer Koppler
- 18, 19, 31, 37: optischer Detektor
- 20, 21: Schwebungssignal
- 22, 33: elektronischer lokaler Oszillator (LO)
- 23, 24: elektronischer Mischer
- 25, 26, 38: Ausgangssignal
- 28: O-PLL
- 32: PLL-Schaltung
- 35: optischer Schalter
- 36: optischer Filter
- 39: Referenzfaser

## Patentansprüche

1. Vorrichtung zur ortsaufgelösten Messung von Temperatur und/oder Dehnung vermittels Brillouin-Streuung, umfassend
- mindestens eine Laserlichtquelle (1), die eine Laserstrahlung erzeugen kann,
- eine zur Messung verwendete Lichtleitfaser (5), in die die Laserstrahlung eingekoppelt werden kann und aus der aufgrund von Brillouin-Streuung erzeugte Brillouin-Signale ausgekoppelt werden können,
- Sensormittel, die die ausgekoppelten Brillouin-Signale erfassen können,
- Auswertemittel, die aus den erfassten Brillouin-Signalen die Temperatur und/oder Dehnung zumindest von Abschnitten der Lichtleitfaser (5) ortsaufgelöst bestimmen können,
- mindestens einen optischen Polarisationsstrahlteiler (10), der die ausgekoppelten Brillouin-Signale in zwei Komponenten (12, 13) mit voneinander verschiedenen Polarisationen aufspalten kann,
- zwei optische Koppler (16, 17), die jeder der beiden von dem mindestens einen optischen Polarisationsstrahlteiler (10) getrennten Komponenten (12, 13) des Brillouin-Signals jeweils eine linear polarisierte Komponente (14, 15) einer Laserstrahlung polarisationsrichtig hinzumischen können.

2. Vorrichtung nach Anspruch 1, **dadurch gekennzeichnet, dass** die Sensormittel die beiden Komponenten (12, 13) getrennt voneinander erfassen können.

3. Vorrichtung nach einem der Ansprüche 1 oder 2, **dadurch gekennzeichnet, dass** die Vorrichtung einen Strahlteiler (2) aufweist, der von der Laserstrahlung der für die Anregung der Brillouin-Streuung verwendeten Laserlichtquelle (1) vor der Einkopplung in die zur Messung verwendete Lichtleitfaser einen Anteil (4) abzweigen kann, wobei dieser Anteil (4) der Laserstrahlung dem Brillouin-Signal hinzugemischt werden kann.

4. Vorrichtung nach einem der Ansprüche 1 oder 2, **dadurch gekennzeichnet, dass** die Vorrichtung eine zweite Laserlichtquelle (27) umfasst, die Laserstrahlung erzeugen kann, die dem Brillouin-Signal hinzugemischt werden kann.

5. Vorrichtung nach Anspruch 4, **dadurch gekennzeichnet, dass** die zweite Laserlichtquelle (27) eine von der ersten Laserlichtquelle (1) verschiedene Frequenz, insbesondere eine um etwa 10 GHz verschiedene Frequenz, aufweist.

6. Vorrichtung nach Anspruch 5, **dadurch gekennzeichnet, dass** die Vorrichtung eine O-PLL (28) umfasst, die die Differenzfrequenz zwischen der ersten und der zweiten Laserlichtquelle (1, 27) stabilisiert.

7. Vorrichtung nach einem der Ansprüche 1 bis 6, **dadurch gekennzeichnet, dass** die Vorrichtung Komponenten für die Messung der Rayleigh-Streuung umfasst.

8. Vorrichtung nach Anspruch 7, **dadurch gekennzeichnet, dass** die Komponenten für die Messung der Rayleigh-Streuung eine weitere Laserlichtquelle (34) umfassen, die von der ersten Laserlichtquelle (1) verschieden ist, wobei vorzugsweise die weitere Laserlichtquelle (34) auch von einer gegebenenfalls vorhandenen zweiten Laserlichtquelle (27) für die Erzeugung einer dem Brillouin-Signal hinzuzumischenden Laserstrahlung verschieden ist.

9. Vorrichtung nach einem der Ansprüche 1 bis 8, **dadurch gekennzeichnet, dass** die Vorrichtung eine als Referenz dienende Lichtleitfaser oder einen als Referenz dienenden Abschnitt der zur Messung verwendeten Lichtleitfaser (5) aufweist, der beispielsweise als Referenzspule (39) ausgebildet ist, und zumindest über eine vorgegebene Länge ein konstantes Brillouin-Signal erzeugt, so dass dieses Brillouin-Signal mit den Sensormitteln erfasst und zur Kalibration der Empfindlichkeit verwendet werden kann.

10. Verfahren zur ortsaufgelösten Messung von Temperatur und/oder Dehnung vermittels Brillouin-Streuung, umfassend folgende Verfahrensschritte:
- Es wird eine Laserstrahlung erzeugt,
- zur Messung von Temperatur und Dehnung wird die Laserstrahlung in eine Lichtleitfaser (5) eingekoppelt,
- von der Laserstrahlung in der Lichtleitfaser (5) erzeugte Brillouin-Signale werden aus der Lichtleitfaser (5) ausgekoppelt,
- die ausgekoppelten Brillouin-Signale werden in zwei Komponenten (12, 13) mit voneinander verschiedenen Polarisationen aufgespalten,
- jeder der beiden Komponenten (12, 13) des Brillouin-Signals wird jeweils eine linear polarisierte Komponente (14, 15) einer Laserstrahlung polarisationsrichtig hinzugemischt,
- die beiden mit den Laserstrahlungen gemischten Komponenten (12, 13) der ausgekoppelten Brillouin-Signale werden erfasst,
- Auswertemittel bestimmen ortsaufgelöst aus den erfassten Komponenten (12, 13) der Brillouin-Signale die Temperatur und/oder Dehnung zumindest von Abschnitten der Lichtleitfaser (5),
- aus den beiden erfassten Komponenten (12, 13) der Brillouin-Signale werden zwei Ausgangssignale (25, 26) generiert, die in geeigneter Weise kombiniert werden, um ein polarisationsunabhängiges Ausgangssignal für die Bestimmung der Temperatur und/oder der Dehnung zu erhalten.

11. Verfahren nach Anspruch 10, **dadurch gekennzeichnet, dass** die beiden Komponenten (12, 13) der ausgekoppelten Brillouin-Signale werden getrennt voneinander erfasst.

12. Verfahren nach einem der Ansprüche 10 oder 11, **dadurch gekennzeichnet, dass** die beiden Ausgangssignale (25, 26) vor oder nach einer Digitalisierung kombiniert werden.

## Claims

1. Device for the space-resolved measurement of temperature and/or strain by means of Brillouin scattering, comprising
- at least one laser light source (1), which can generate a laser radiation,
- an optical fibre (5) used for the measurement, into which the laser radiation can be coupled and from which Brillouin signals generated on account of Brillouin scattering can be decoupled,
- sensor means that can detect the decoupled Brillouin signals,
- evaluation means that can determine in a space-resolved manner from the detected Brillouin signals the temperature and/or strain at least of sections of the optical fibre (5),
- at least one optical polarisation beam splitter (10), which can split the decoupled Brillouin signals into two components (12, 13) with polarisations different from one another,
- two optical couplers (16, 17), which can respectively admix in the correct polarisation a linearly polarised component (14, 15) of a laser radiation with each of the two components (12, 13) of the Brillouin signal separated from the at least one optical polarisation beam splitter (10).

2. Device according to claim 1, **characterised in that** the sensor means can detect the two components (12, 13) separately from one another.

3. Device according to either one of claims 1 or 2, **characterised in that** the device comprises at least one beam splitter (2), which can channel off a portion (4) from the laser radiation of the laser light source (1) used for the excitation of the Brillouin scattering before the coupling into the optical fibre used for the measurement, wherein this portion (4) of the laser radiation can be admixed with the Brillouin signal.

4. Device according to either one of claims 1 or 2, **characterised in that** the device comprises a second laser light source (27), which can generate laser radiation that can be admixed with the Brillouin signal.

5. Device according to claim 4, **characterised in that** the second laser light source (27) has a frequency different from that of the first laser light source (1), in particular a frequency that is different by about 10 GHz.

6. Device according to claim 5, **characterised in that** the device comprises an O-PLL (28), which stabilises the difference frequency between the first and the second laser light source (1, 27).

7. Device according to any one of claims 1 to 6, **characterised in that** the device comprises components for the measurement of the Rayleigh scattering.

8. Device according to claim 7, **characterised in that** the components for the measurement of the Rayleigh scattering comprise a further laser light source (34), which is different from the first laser light source (1), wherein preferably the further laser light source (34) is also different from an optionally present second laser light source (27) for the generation of a laser radiation to be admixed with the Brillouin signal.

9. Device according to any one of claims 1 to 8, **characterised in that** the device comprises an optical fibre serving as reference or a section of the optical fibre (5) serving as reference and used for the measurement, which for example is formed as a reference spool (39), and generates a constant Brillouin signal at least over a predetermined length, so that this Brillouin signal can be detected with the sensor means and can be used to calibrate the sensitivity.

10. Method for the space-resolved measurement of temperature and/or strain by means of Brillouin scattering, comprising the following process steps:
- a laser radiation is generated,
- the laser radiation is coupled into an optical fibre (5) for the measurement of temperature and strain,
- Brillouin signals generated in the optical fibre (5) by the laser radiation are decoupled from the optical fibre (5),
- the decoupled Brillouin signals are split into two components (12, 13) with polarisations different from one another,
- a linearly polarised component (14,15) of a laser radiation is respectively admixed with the correct polarisation with each of the two components (12, 13) of the Brillouin signal,
- the two components (12, 13) of the decoupled Brillouin signals mixed with the laser radiations are detected,
- evaluation means determine in a space-resolved manner from the detected components (12, 13) of the Brillouin signals the temperature and/or strain at least of sections of the optical fibre (5),
- two output signals (25, 26) are generated from the two detected components (12, 13) of the Brillouin signals, which outward signals are combined in a suitable manner in order to obtain a polarisation-independent output signal for the determination of the temperature and/or strain.

11. Method according to claim 10, **characterised in that** the two components (12, 13) of the decoupled Brillouin signals are detected separately from one another.

12. Method according to any one of claims 10 or 11, **characterised in that** the two output signals (25, 26) are combined before or after a digitisation.

## Revendications

1. Dispositif de mesure spatiale de température et/ou dilatation au moyen d'une diffusion Brillouin, comprenant
- au moins une source de lumière laser (1), qui peut produire un rayonnement laser,
- une fibre optique (5), utilisée pour la mesure, dans laquelle le rayonnement laser peut être introduit et de laquelle des signaux Brillouin produits par une diffusion Brillouin peuvent être sortis,
- des moyens capteurs, qui peuvent détecter les signaux Brillouin sortis,
- des moyens d'évaluation, qui peuvent déterminer spatialement, sur la base des signaux Brillouin détectés, la température et/ou dilatation au moins de tronçons de la fibre optique (5),
- au moins un séparateur de faisceau de polarisation optique (10), qui peut scinder les signaux Brillouin sortis en deux composantes (12, 13) avec des polarisations différentes l'une de l'autre,
- deux coupleurs optiques (16, 17), qui peuvent mélanger à chacune des deux composantes (12, 13) du signal Brillouin séparées par l'au moins un séparateur de faisceau de polarisation optique (10) à chaque fois une composante à polarisation linéaire (14, 15) d'un rayonnement laser en respectant les polarisations.

2. Dispositif selon la revendication 1, **caractérisé en ce que** les moyens capteurs peuvent détecter les deux composantes (12, 13) séparément l'une de l'autre.

3. Dispositif selon l'une quelconque des revendications 1 ou 2, **caractérisé en ce que** le dispositif comporte un séparateur de faisceau (2) qui peut, avant l'introduction dans la fibre optique utilisée pour la mesure, dériver une partie (4) du rayonnement laser de la source de lumière laser (1) utilisée pour l'excitation de la diffusion Brillouin, laquelle partie (4) du rayonnement laser peut être mélangée au signal Brillouin.

4. Dispositif selon l'une quelconque des revendications 1 ou 2, **caractérisé en ce que** le dispositif comprend une deuxième source de lumière laser (27) qui peut produire un rayonnement laser qui peut être mélangé au signal Brillouin.

5. Dispositif selon la revendication 4, **caractérisé en ce que** la deuxième source de lumière laser (27) comporte une fréquence différente de la première source de lumière laser (1), en particulier une fréquence différente de 10 GHz environ.

6. Dispositif selon la revendication 5, **caractérisé en ce que** le dispositif comprend une O-PLL (28) qui stabilise la fréquence de différence entre la première et la deuxième source de lumière laser (1, 27).

7. Dispositif selon l'une quelconque des revendications 1 à 6, **caractérisé en ce que** le dispositif comprend des composantes pour la mesure de la diffusion Rayleigh.

8. Dispositif selon la revendication 7, **caractérisé en ce que** les composantes destinées à la mesure de la diffusion Rayleigh comprennent une autre source de lumière laser (34) qui est différente de la première source de lumière laser (1), laquelle autre source de lumière laser (34) est de préférence aussi différente d'une deuxième source de lumière laser (27) présente le cas échéant en vue de la production d'un rayonnement laser à mélanger au signal Brillouin.

9. Dispositif selon l'une quelconque des revendications 1 à 8, **caractérisé en ce que** le dispositif présente une fibre optique servant de référence ou un tronçon, servant de référence, de la fibre optique (5) utilisée pour la mesure, qui est réalisé par exemple sous la forme d'une bobine de référence (39), et produit un signal Brillouin constant au moins sur une longueur prédéterminée de sorte que ce signal Brillouin peut être détecté avec les moyens capteurs et être utilisé pour le calibrage de la sensibilité.

10. Procédé destiné à la mesure spatiale de température et/ou dilatation au moyen d'une diffusion Brillouin, comprenant les étapes de procédé suivantes :
- on produit un rayonnement laser,
- pour mesurer température et dilatation, on introduit le rayonnement laser dans une fibre optique (5),
- on sort de la fibre optique (5) des signaux Brillouin produits par le rayonnement laser dans la fibre optique (5),
- on scinde les signaux Brillouin sortis en deux composantes (12, 13) avec des polarisations différentes l'une de l'autre,
- on mélange à chacune des deux composantes (12, 13) du signal Brillouin à chaque fois une composante à polarisation linéaire (14, 15) d'un rayonnement laser en respectant les polarisations,
- on détecte les deux composantes (12, 13), mélangées aux rayonnementx laser, des signaux Brillouin sortis,
- des moyens d'évaluation déterminent spatialement, à partir des composantes (12, 13) détectées des signaux Brillouin, la température et/ou dilatation au moins de tronçons de la fibre optique (5),
- à partir des deux composantes (12, 13) détectées des signaux Brillouin, on produit deux signaux de sortie (25, 26) qui sont combinés de manière appropriée pour obtenir un signal de sortie indépendant de la polarisation en vue de la détermination de la température et/ou de la dilatation.

11. Procédé selon la revendication 10, **caractérisé en ce qu'**on détecte les deux composantes (12,13) des signaux Brillouin sortis séparément l'une de l'autre.

12. Procédé selon l'une quelconque des revendications 10 ou 11, **caractérisé en ce qu'**on combine les deux signaux de sortie (25, 26) avant ou après une numérisation.
